(19) Europäisches Patentamt

**European Patent Office**

**Office européen des brevets**

(11) Veröffentlichungsnummer: **0 303 165 B1**

(12) # EUROPÄISCHE PATENTSCHRIFT

(45) Veröffentlichungstag der Patentschrift: **17.06.92**

(21) Anmeldenummer: **88112583.5**

(22) Anmeldetag: **03.08.88**

(51) Int. Cl.⁵: **B05D 7/00**, B05C 9/02

(54) **Verfahren zur Oberflächenbehandlung und Tiefimprägnierung von porösen Oberflächen sowie Vorrichtung zur Durchführung des Verfahrens.**

(30) Priorität: **14.08.87 DK 4245/87**

(43) Veröffentlichungstag der Anmeldung:
**15.02.89 Patentblatt 89/07**

(45) Bekanntmachung des Hinweises auf die
Patenterteilung:
**17.06.92 Patentblatt 92/25**

(84) Benannte Vertragsstaaten:
**BE DE FR GB LU NL**

(56) Entgegenhaltungen:
**DE-A- 3 245 902**
**DE-B- 2 519 542**

(73) Patentinhaber: **Rockwool International A/S
501, Hovedgaden
DK-2640 Hedehusene(DK)**

(72) Erfinder: **Petersen, Jörgen Skjold
Bygaden 63
DK-4000 Roskilde, Veddelev(DK)**

(74) Vertreter: **Köhne, Friedrich, Dipl.-Ing.
Rondorferstrasse 5a
W-5000 Köln 51 (Marienburg)(DE)**

**Beschreibung**

Die vorliegende Erfindung betrifft ein Verfahren zur Oberflächenbehandlung und Tiefimprägnierung von im wesentlichen ebenflächigen Außenfassadenbekleidungen aus porösem Material, insbesondere Mineralwolle, mit einem flüssigen Oberflächenbehandlungs- und/oder Imprägnierungsmittel.

Es ist bekannt, poröse Oberflächen von beispielsweise steifen Mineralwollplatten auf der Oberfläche zu behandeln. Gewöhnlicherweise wird bei der Oberflächenbehandlung Anstrichmittel verwendet. Der Anstrich kann in verschiedener Weise der porösen Oberfläche zugeführt werden. Beispiele von Zufuhrmethoden sind Spritzarbeit, Zufuhr mit Lackteppichmaschinen und Eintauchen. Ein verbessertes Eindringen des Antrichs in der porösen Oberfläche wird erreicht, wenn diese Verfahren unter Vakuum durchgeführt werden.

Es ist, wenn es sich um steife Mineralwollplatten für z. B. Außenfassadenbekleidung handelt, besonders wichtig, daß bei der Oberflächenbehandlung mit Anstrich oder dem Oberflächenbehandlungsmittel eine ausreichende Eindringungstiefe des Anstrichs erreicht wird, in der Größe von 3-10 mm, vorzugsweise 5 mm. In dieser Weise wird eine genügend steife und stoßfeste Oberfläche erreicht, so daß eine Fassade in Straßenebene Schlägen und Stößen von Kinderspielen, Fahrradlenkern und ähnlichen, normalerweise vorkommenden Berührungen widerstehen kann.

Beim Aufbau von Außenfassadenisolierung ist es, wenn das Isoliermaterial angebracht ist, unmöglich, von der Hinterseite des Isoliermaterials das für die bekannten Zufuhrmethoden für Anstrich notwendige Vakuum zu etablieren, z. B. mittels Vakuumgeräten. Dies ist ein Nachteil, da es somit bei diesen Verfahren schwer oder unmöglich ist, ausreichend große Eindringungstiefen des Anstrichs in der Mineralwollplatte zu erreichen, warum es schwer ist, eine genügend stoßfeste Fassade zu erreichen.

Es wird - insbesondere mit Rücksicht auf die Umwelt - immer mehr üblich, wasserbasierte Typen von Anstrichen bei der Oberflächenbehandlung zu verwenden. Da normalerweise die Mineralwolle wasserabweisend hergestellt wird, wird das genannte Problem, eine genügend große Eindringtiefe zu erreichen, verstärkt.

Der Erfindung liegt die Aufgabe zugrunde, ausgehend von dem zu Anfang angegebenen Verfahren, das Verfahren so zu verbessern, daß eine große Eindringtiefe des Oberflächenbehandlungs- und/oder Imprägnierungsmittels erreicht werden kann.

Die gestellte Aufgabe wird erfindungsgemäß dadurch gelöst, daß der Außenfläche der Außenfassadenbekleidung flächenabschnittsweise nacheinander das Oberflächenbehandlungs- und/oder Imprägnierungsmittel in einer vorbestimmten Menge durch eine für das Mittel durchlässige elastische und am Rand abgedichtete, gegen den Flächenabschnitt gedrückte Verteilungseinrichtung unter Druck zugeführt wird.

Da die Zufuhr des Oberflächenbehandlungs- und/oder Imprägnierungsmittels, z. B ein Anstrich, mit Regulierung durch eine Verteilungseinrichtung und unter Druck stattfindet, wird eine ausreichende Eindringtiefe des Anstriches in der Oberfläche von z. B. der Mineralwollplatte gesichert, und es hat sich außerdem gezeigt, daß diese Eindringung sehr gleichmäßig ist. Bei dem Verfahren wird eine gleichmäßige Schichtdicke der durchgeführten Behandlung erreicht, ohne daß es notwendig ist, von einer unsicheren visuellen Kontrolle abhängig zu sein. Ferner ist es gegebenenfalls möglich, die notwendige Eindringung des wasserbasierten Anstrichs in wasserabweisender Mineralwolle zu erzielen, indem die Behandlungsmethode gleichzeitig kostenersparend und umweltverträglich ist. Es ist hinzuzufügen, daß das Verfahren ebensogut bei Oberflächenbehandlungsmittel auf Lösungsmittelbasis verwendet werden kann, weil dadurch eine haltbare und wetterfeste Oberfläche erreicht wird, indem die Anstrichsschicht als Armierungsmittel für das poröse Material unter der Oberfläche dient. Wenn eine Imprägnierung der Hauptzweck der Behandlung ist, wird ein Imprägnierungsmittel verwendet, das eventuell auch genügend pigmentiert sein kann, um das gewünschte Aussehen der Oberfläche zu erzielen. Bei Imprägnierung ist in dieser Beziehung auch Armierung oder Zusammenbinden zu verstehen.

Bei dem erfindungsgemäßen Verfahren kann in vielen Fällen eine Reihe von kostenverursachenden Bearbeitungsstufen bei dem Aufbau von Außenmauerisolierungen erspart werden, indem die sonst notwendige Zufuhr zu den durch Kleben oder Festschrauben angebrachten Mineralwollplatten Armierungsgewebe und Mauerbewurf und evtl. aufgeklebten Fliesen durch eine Oberflächenbehandlung nach dem erfindungsgemäßen Verfahren ersetzt werden kann, da es möglich ist, der Oberfläche sowohl in bezug auf Aussehen als auch Widerstandsfähigkeit zufriedenstellende Eigenschaften zu erhalten.

Vorteilhafte Ausgestaltungen des Verfahrens sind in den Unteransprüchen 2 bis 7 angegeben.

Die Erfindung betrifft ferner eine Vorrichtung zur Durchführung des Verfahrens, die durch die Merkmale des Anspruchs 8 gekennzeichnet ist.

Vorteilhafte Ausgestaltungen der Vorrichtung ergeben sich aus den Unteransprüchen 9 bis 14.

Die Erfindung wird nachfolgend mit Hinweis auf ein in der Zeichnung gezeigtes Ausführungsbeispiel näher erläutert. In der Zeichnung zeigt

Figur 1 eine schematische Abbildung der Vorrichtung für die Zufuhr unter Druck von Anstrich, und

Figur 2 einen Schnitt durch eine Ebene in Verhältnis zu der Symmetrieebene der Verteilungseinrichtung gemäß Figur 1 versetzt.

Figur 3 eine Teilansicht der Verteilungsvorrichtung gemäß Figur 2.

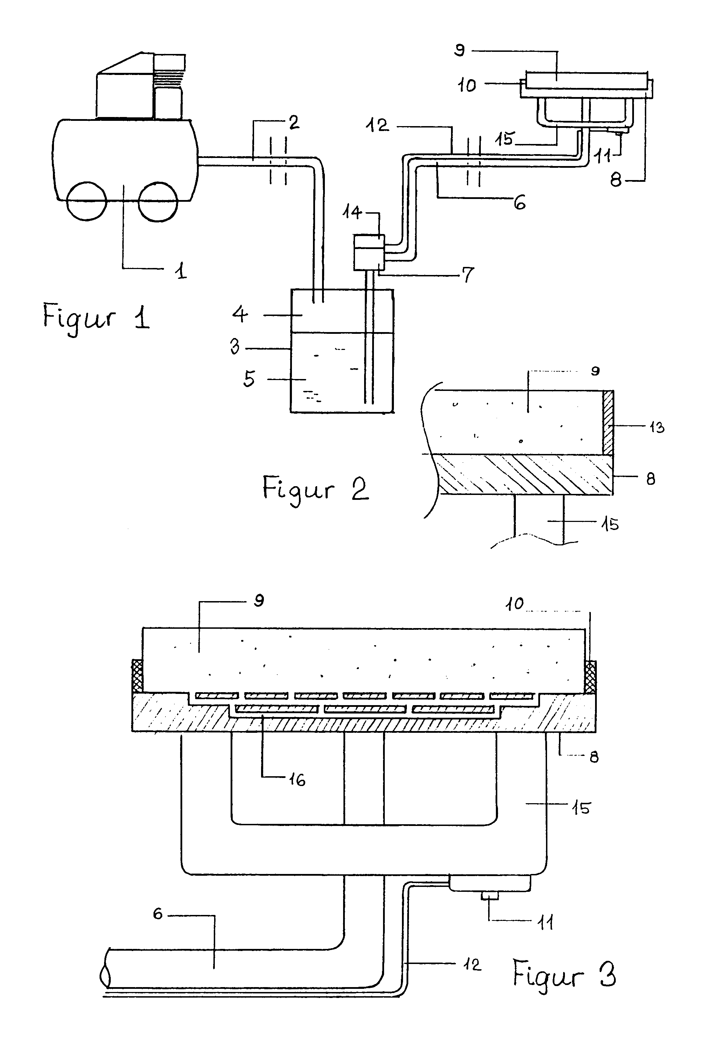

Die in Figur 1 gezeigte Vorrichtung, die zur Verwendung bei Oberflächenbehandlung von porösen Oberflächen mit einem in flüssiger Form vorhandenen Oberflächenbehandlungs- und/oder Imprägnierungsmittel, wie Anstrich, umfaßt als Druckquelle einen Kompressor 1, einen Druckbehälter 3 für den Anstrich und eine Verteilungseinrichtung 8 für die Zufuhr des Anstrichs. Der Kompressor leistet einen konstanten Luftdruck von typisch 2-5 Atm., welcher Druck durch einen Druckschlauch 2 zu dem geschlossenen Druckbehälter 3 zugeleitet wird. Dieser Behälter 3 ist mit Anstrich 5 zu einem gewissen Niveau gefüllt, indem sich ein Hohlraum 4 über der Oberfläche des Anstrichs befindet. In diesem Hohlraum wird der vom Kompressor 1 zugeführte Luftdruck aufrechterhalten. Der Druck gegen die Oberfläche des Anstrichs 5 preßt, wenn ein Magnetventil 7 offen ist, Anstrich in einen Schlauch 6. Durch den Schlauch 6 wird der Anstrich zu der Verteilungseinrichtung geleitet, welche Einrichtung aus einem System von Platten und Kanälen 16 gebildet ist, die eine gleichmäßige Verteilung des Anstrichs zu dem auf der Verteilungseinrichtung 8 angebrachten elastischem Verteilungsmedium sichert. Dieses Verteilungsmedium ist von rundgehenden Dichtungsorganen 10, 13 umgeben, die die Form eines Gummistreifens 10 oder einer elastischen porendichtenden Schicht 13 haben können. Die Verteilungseinrichtung 8 ist außerdem mit einem Handgriff 15 und einem Kontakt 11 ausgestattet, die bei Aktivierung mittels Leitungen 12 einen Zeitregler 14 für die Öffnung des Magnetventils 7 in einem voraus bestimmten Zeitraum aktivieren.

Die eigentliche Oberflächenbehandlung mit Anstrich von der porösen Oberfläche, die z. B. die Außenoberfläche von steifen Mineralwollplatten sein kann, die zur Außenseite einer Mauer festgemacht worden sind, geschieht nach dem Aufsetzen von der gewünschten Mineralwolldicke (z. B. durch Kleben mit nachfolgendem Härten des Klebers), und es kann zweckmäßig sein, vor der Oberflächenbehandlung mit Anstrich die gebildete Fassade leicht zu schleifen, um eventuelle kleine Niveauunterschiede auszuglätten. Nach einer leichten Bürste wird die Verteilungseinrichtung 8 auf die zu oberflächenbehandelnden Fläche mit dem Verteilungsmedium 9 gegen die Fläche gewandt angebracht. Die Verteilungseinrichtung 8 wird gegen die Oberfläche gepreßt, normalerweise mit einem Druck von 4-20 kg. Aktivierung des Kontakts 11 öffnet durch den Zeitregler 14 das Magnetventil in einem vorausbestimmten Zeitraum. Dabei strömt Anstrich von dem Behälter 3 durch Magnetventil und Schlauch 6 zu der Verteilereinrichtung 8, die mit der vorausbestimmten Menge Anstrich unter einem vorausbestimmten Druck gefüllt wird. In Abhängigkeit von Anstrich und Verdünnungsgrad hat die Erfahrung gezeigt, daß in der Verteilungseinrichtung 8 ein Druck von 100 - 1000 mm VS vorhanden sein muß. Mit einer Verteilungseinrichtung 8 von der Größe 10 x 20 cm wird ein Gegendruck von etwa 2-20 KP erreicht, der von dem Betätiger auf der Verteilungseinrichtung zumindest auszuüben ist. Es hat sich ferner gezeigt, daß der Zeitregler 14, um eine Eindringung des Anstrichs bis 4-8 kg/cm$^2$ zu erreichen, auf Zeiten von 1/2 bis 3 Sek. pro Arbeitsgang einzustellen ist. Am Ende der Operation wird der Druck des Betätigers auf der Verteilungseinrichtung ausgelöst, wobei sich das zusammengepreßte Verteilungsmedium 9 erweitert, so daß überschießender Anstrich in das Medium 9 aufgesaugt wird. Die Oberflächenbehandlung wird zweckmäßig von oben bis unten auf der zu behandelnden Oberfläche durchgeführt, da dabei eventuelle Tropfen nicht ersichtlich werden. Zugleich wird die Verteilungseinrichtung 8 so angebracht, daß sie mit einer Überlappung in Verhältnis zu der schon behandelten Oberfläche angebracht wird. Dieses Verfahren ermöglicht 1 m$^2$ in etwa 2 Min. zu behandeln, wenn der Zeitregler 14 auf etwa 1 1/2 Sek. eingestellt ist, und es dauert etwa 1/2 Sek., die Verteilungseinrichtung von dem einen Areal der Oberfläche zu dem anderen zu rücken. In der oben genannten Weise wird eine Eindringungstiefe des Anstrichs in der Oberfläche von etwa 7mm erreicht. Es ist insbesondere bei der Oberflächenbehandlung von sehr porösen Materialien zweckmäßig, daß der Strömungswiderstand gegen die Strömung des Imprägnierungsmittels in dem elastischen Verteilungsmedium größer ist als der Strömungswiderstand in dem porösen Material. Der größere Strömungswiderstand trägt dazu bei, die Verteilung des Imprägnierungsmittels auf Grund des dabei vorkommenden Druckfalls gleichmäßig zu machen.

Das Verfahren nach der Erfindung kann zugleich mit einer Vorrichtung durchgeführt werden, die mittels einer Dosierungspumpe direkt die vorausbestimmte Menge des Oberflächenbehandlungs- oder Imprägnierungmittels abläßt. Die oben beschriebene Zeitsteuerung ist allein als ein Beispiel angegeben, weil sie sehr wenige und robuste Komponenten enthält, die in Verbindung mit dem Oberflächenbehandlungs- und Imprägnierungsmittel in Berührung kommen.

**Patentansprüche**

1. Verfahren zur Oberflächenbehandlung und Tiefimprägnierung von im wesentlichen ebenflächigen Außenfassadenbekleidungen aus porösem Material, insbesondere Mineralwolle, mit einem flüssigen Oberflächenbehandlungs- und/oder Imprägnierungsmittel, dadurch gekennzeichnet, daß der Außenfläche der Außenfassadenbekleidung flächenabschnittsweise nacheinander das Oberflächenbehandlungs- und/oder Imprägnierungsmittel in einer vorbestimmten Menge durch eine für das Mittel durchlässige elastische und am Rand abgedichtete, gegen den Flächenabschnitt gedrückte Verteilungseinrichtung (8) unter Druck zugeführt wird.

2. Verfahren nach Anspruch 1, dadurch gekennzeichnet, daß das Oberflächenbehandlungs- und/oder Imprägnierungsmittel durch einen offenzelligen Schaumstoffschwamm (9) der Verteilungseinrichtung hindurchgeführt und hierin verteilt wird.

3. Verfahren nach Anspruch 2, dadurch gekennzeichnet, daß das Oberflächenbehandlungs- und/oder Imprägnierungsmittel durch ein System von Platten und Kanälen (16) der Verteilungseinrichtung (8) geleitet wird, bevor es in den Schaumstoffschwamm (9) gelangt.

4. Verfahren nach einem der vorhergehenden Ansprüche, dadurch gekennzeichnet, daß die Menge des Oberflächenbehandlungs- und/oder Imprägnierungsmittels durch eine Zeitsteuerung (7, 14) bei im wesentlichen konstantem Druck geregelt wird.

5. Verfahren nach einem der Ansprüche 2 bis 4, dadurch gekennzeichnet, daß die Elastizität des Schaumstoffschwammes (9) so gewählt wird, daß er bei Druckentlastung teilweise aus der Randdichtung (10) herausragt und überschüssiges Oberflächenbehandlungs- und/oder Imprägnierungsmittel von der Außenfläche abgesaugt wird.

6. Verfahren nach einem der vorhergehenden Ansprüche, dadurch gekennzeichnet, daß das Oberflächenbehandlungs- und/oder Imprägnierungsmittel mit einem solchen Druck eingepreßt wird, daß die Eindringtiefe 3 mm bis 10 mm, vorzugsweise 5 mm, beträgt.

7. Verfahren nach einem der vorhergehenden Ansprüche, dadurch gekennzeichnet, daß als Oberflächenbehandlungs- und/oder Imprägnierungsmittel ein Anstrich auf Wasserbasis gewählt wird.

8. Vorrichtung zur Durchführung des Verfahrens nach einem der Ansprüche 1 bis 7, dadurch gekennzeichnet, daß eine Verteilungseinrichtung (8) mit einem für das Oberflächenbehandlungs- und/oder Imprägnierungsmittel durchlässigen Verteilungselement (9) vorgesehen ist, daß das Verteilungselement (9) aus einem elastischen Material besteht und am Rande von einer Dichtung (10) umgeben ist, daß an die Verteilungseinrichtung (8) ein Druckbehälter (3) und an diesen eine Druckquelle (1) angeschlossen sind, und daß eine Vorrichtung zum Regeln (7, 14) einer vorbestimmten Menge des Mittels vorgesehen ist.

9. Vorrichtung nach Anspruch 8, dadurch gekennzeichnet, daß die Vorrichtung zum Regeln einen Zeitregler (14) aufweist, welcher bei im wesentlichen konstantem Druck in einem vorausbestimmten Zeitraum ein Magnetventil (7) öffnet.

10. Vorrichtung nach Anspruch 8, dadurch gekennzeichnet, daß die Vorrichtung zum Regeln eine Dosierungspumpe aufweist.

11. Vorrichtung nach einem der Ansprüche 8 bis 10, dadurch gekennzeichnet, daß das Verteilungselement (9) aus einem offenzelligen Schaumstoffschwamm besteht.

12. Vorrichtung nach Anspruch 8 und 9, dadurch gekennzeichnet, daß die Verteilungseinrichtung einen Handgriff (15) und einen Kontakt (11) zum Einschalten des Zeitreglers (14) aufweist.

13. Vorrichtung nach einem der Ansprüche 8 bis 12, dadurch gekennzeichnet, daß die Verteilungseinrichtung (8) ein System von Platten und Kanälen (16) aufweist, welches das Mittel auf das Verteilungselement (9) verteilt.

14. Vorrichtung nach einem der Ansprüche 8 bis 13, dadurch gekennzeichnet, daß das Material des Verteilungselements (9) so gewählt ist, daß dessen Strömungswiderstand größer als der Strömungswiderstand in dem porösen Material ist, welches zu tiefimprägnieren ist.

**Claims**

1. A process for surface coating and deep impregnating a substantially plane external facade covering of a porous material, particular mineral wool, with a liquid surface coating and/or impregnation agent, **characterized** in supplying a predetermined amount of the surface coating and/or impregnation agent to section by section of the outer surface of the external facade covering under pressure and through a distribution device (8) pressed against the surface section, which distribution device (8) is permeable to said agent, elastic and sealed at its edges.

2. A process according to claim 1, **characterized** in bringing the surface coating and/or impregnation agent through a foamed open cell sponge (9) of the distribution device and distributing said agent therein.

3. A process according to claim 2, **characterized** in directing the surface coating and/or impregnation agent through a system of plates and channels (16) of the distribution device (8) before it enters the foamed sponge (9).

4. A process according to any of the preceeding claims, **characterized** in controlling the amount of the surface coating and/or impregnation agent by means of a time controlling means (7, 14) at substantially constant pressure.

5. A process according to any of the claims 2 to 4, **characterized** in selecting the elasticity of the foamed sponge (9) so that it partly extends beyond the edge seal (10) when relieved from pressure and sucking off excess coating and/or impregnation agent from the outer surface.

6. A process according to any of the preceeding claims, **characterized** in pressing in the surface coating and/or impregnation agent using such a pressure that the penetration depth is from 3 mm to 10 mm, preferably 5 mm.

7. A process according to any of the preceeding claims, **characterized** in selecting a water-based paint as surface coating and/or impregnation agent.

8. A device for carrying out the process of any of claims 1 to 7, **characterized** in comprising a distribution device (8) having a distribution element (9) permeable to the surface coating and/or impregnation agent and a device (7, 14) for controlling a predetermined amount of said agent, and that the distribution element (9) consists of an elastic material and is surrounded by a seal (10) at its edges, and that the distribution device (8) is connected to a pressure container (3), which is connected to a pressure source (1).

9. A device according to claim 8, **characterized** in that the controlling device comprises a time controller (14), which at substantially constant pressure opens a magnetic valve (7) for a predetermined period of time.

10. A device according to claim 8, **characterized** in that the controlling device comprises a dosing pump.

11. A device according to any of the claims 8 to 10, **characterized** in that the distribution element (9) consists of a foamed open cell sponge.

12. A device according to claim 8 or 9, **characterized** in that the distribution device comprises a handle (15) and a contact (11) for switching on the time controller (14).

13. A device according to any of the claims 8 to 12, **characterized** in that the distribution device (8) comprises a system of plates and channels (16), which distributes said agent on the distribution element (9).

14. A device according to any of the claims 8 to 13, **characterized** in that the material of the distribution element (9) is selected so that its flow resistance is higher than the flow resistance in the porous material to be deep impregnated.

**Revendications**

1. Procédé de traitement superficiel et d'imprégnation profonde de revêtements extérieurs de façade à surface pratiquement plane et en matériau poreux, notamment en laine minérale, au moyen d'un agent liquide de traitement superficiel et/ou d'imprégnation, caractérisé en ce que l'agent de traitement superficiel et/ou d'imprégnation est appliqué section de surface par section de surface à la surface extérieure du revêtement extérieur de façade, en une quantité préfixée et sous pression, au moyen d'un dispositif de répartition (8) qui est élastique et perméable vis-à-vis de l'agent et qui est appliqué, de manière étanche sur son bord, en appui sur la section de surface.

2. Procédé suivant la revendication 1, caractérisé en ce que l'agent de traitement superficiel et/ou d'imprégnation traverse le dispositif de répartition dans un produit alvéolaire (9) à alvéoles ouverts et y est réparti.

3. Procédé suivant la revendication 2, caractérisé en ce que l'agent de traitement superficiel et/ou d'imprégnation est amené au dispositif de répartition (8) en traversant un système de plaques et conduits (16) avant de parvenir dans le produit alvéolaire (9).

4. Procédé suivant l'une des revendications précédentes, caractérisé en ce que la quantité de l'agent de traitement superficiel et/ou d'imprégnation est réglée au moyen d'une commande de temps (7, 14) alors que la pression est pratiquement constante.

5. Procédé suivant l'une des revendications 2 à 4, caractérisé en ce que l'élasticité du produit alvéolaire (9) est choisie de façon telle que, lorsque la pression est relâchée, il fait partiellement saillie par rapport à la garniture d'étanchéité périphérique (10) et que l'agent de traitement superficiel et/ou d'imprégnation en excès est aspiré par la surface extérieure.

6. Procédé suivant l'une des revendications précédentes, caractérisé en ce que l'agent de traitement superficiel et/ou d'imprégnation est appliqué avec une pression telle que la profondeur de pénétration a une valeur de 3 mm à 10 mm, de préférence de 5 mm.

7. Procédé suivant l'une des revendications précédentes, caractérisé en ce qu'en tant qu'agent de traitement superficiel et/ou d'imprégnation, on choisit une peinture à base d'eau.

8. Appareil permettant la mise en oeuvre du procédé suivant l'une des revendications 1 à 7, caractérisé en ce qu'il est prévu un dispositif de répartition (8) comportant un élément de répartition (9) perméable vis-à-vis de l'agent de traitement superficiel et/ou d'imprégnation, en ce que cet élément de répartition (9) est constitué d'un matériau élastique et est entouré d'une garniture d'étanchéité (10) sur son bord, en ce qu'un récipient résistant à la pression (3) est raccordé au dispositif de répartition (8) et une source de pression (1) raccordée à ce récipient résistant à la pression (3) et en ce qu'il est prévu un dispositif (7,14) permettant de régler une quantité prédéterminée dudit agent.

9. Appareil suivant la revendication 8, caractérisé en ce que le dispositif de réglage comprend une minuterie (14) qui, pour une pression pratiquement constante, ouvre une électrovanne (7) pendant une période de temps prédéterminée.

10. Appareil suivant la revendication 8, caractérisé en ce que le dispositif de réglage comprend une pompe doseuse.

11. Dispositif suivant l'une des revendications 8 à 10, caractérisé en ce que l'élément de répartition (9) est constitué d'un produit alvéolaire à alvéoles ouverts.

12. Appareil suivant les revendications 8 et 9, caractérisé en ce que le dispositif de répartition comprend une poignée (15) et un contact (11) permettant de mettre en service la minuterie (14).

13. Appareil suivant l'une des revendications 8 à 12, caractérisé en ce que le dispositif de répartition (8) comprend un système de plaques et de conduits (16) qui répartit ledit agent sur l'élément de répartition (9).

14. Dispositif suivant l'une des revendications 8 à 13, caractérisé en ce que le matériau de l'élément de répartition (9) est choisi de telle façon que sa résistance à l'écoulement soit supérieure à la résistance à l'écoulement dans le matériau poreux qui doit faire l'objet d'une imprégnation profonde.

Figur 1

Figur 2

Figur 3